# EUROPÄISCHE PATENTSCHRIFT

(11) **EP 1 231 429 B1**
(45) Veröffentlichungstag und Bekanntmachung des Hinweises auf die Patenterteilung: **11.04.2012**
(21) Anmeldenummer: 02100037.7
(22) Anmeldetag: 18.01.2002
(51) Int. Cl.: F21V 8/00

(54) **Farbige Beleuchtungseinrichtung**
Color illumination device
Dispositif d'illumination en couleur

(30) Priorität: 20.01.2001 DE 10102585
(43) Veröffentlichungstag der Anmeldung: 14.08.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Greiner, Horst Dr., Philips Corp.Int.Prop.GmbH, 52066, Aachen (DE)
(74) Vertreter: Volmer, Georg

(56) Entgegenhaltungen:
- EP-A- 0 921 568
- WO-A1-90/13885
- DE-A- 19 903 587
- DE-A- 19 910 273
- DE-U1- 29 915 399
- FR-A- 2 174 380
- JP-A- 04 338 723
- JP-A- 08 255 504
- US-A- 2 880 536
- US-A- 2 945 313
- US-A- 3 077 535
- US-A- 3 450 870
- US-A- 5 876 107
- US-A- 6 007 209

## Beschreibung

Die Erfindung betrifft eine Bdeuchtungseinrichtung zur Erzeugung von Mischfarben, die eine Lichtaustrittsfläche sowie eine Mehrzahl von Lichtquellen (wie zum Beispiel Leuchtdioden) mit verschiedenen Farben umfasst, und die insbesondere zur Hinterleuchtung von Flüssigkristallanzeigen wie LCD-Bildschirmen oder zur Anwendung als flächiger Lichtstrahler geeignet ist.

Es ist bekannt, das Licht von verschiedenfarbigen Leuchtdioden (LEDs) zu mischen, um eine gewünschte Mischfarbe zu erhalten. Ein Problem hierbei besteht jedoch darin, die Mischfarbe gleichmäßig und homogen, dh ohne Farb- und Helligkeitsabweichungen auf einer größeren Fläche zu erzeugen. Diese Schwierigkeiten beruhen im wesentlichen darauf, dass die Lichtintensität und die Lichtfarbe der einzelnen Leuchtdioden, auch wenn es sich um solche des gleichen Typs handelt, relativ stark schwanken kann, und dass eine gleichmäßige Verteilung des von jeder Lichtquelle abgegebenen Lichtes auf der Lichtaustrittsfläche nur unzureichend möglich ist.

In der EP 0 921 568 werden mehrere Möglichkeiten beschrieben, das Licht von verschiedenfarbigen Leuchtdioden so zu kombinieren, dass weißes Licht entsteht. Gemäß der dortigen Figur 9 werden zum Beispiel LED-Module mit blauem, rotem, grünem und gelbem Licht mit bestimmten Abständen auf einem Trägermaterial angeordnet. Die Mischung des von den einzelnen LED-Modulen emittierten Lichtes erfolgt mit jeweils zugeordneten Prismen, so dass in einem zenteralen Bereich des Trägermaterials im wesentlichen weißes Licht entsteht. Weiterhin wird vorgeschlagen, eine möglichst gleichmäßige Abstrahlung des erzeugten Lichtes durch ein in bestimmter Weise gekrümmtes Trägermaterial für die LEDs zu erzielen, oder zu diesem Zweck Linsenanordnungen, Diffusorplatten, Stege oder in bestimmter Weise gestufte Trägermaterialien zu verwenden.

Die Nachteile dieser Anordnungen bestehen darin, dass die Herstellung relativ aufwendig und der Platzbedarf relativ hoch ist und dass auch die Gleichmäßigkeit und Homogenität des abgegebene Lichtes im Hinblick auf seine Farbe und Helligkeit insbesondere auf größeren Flächen für viele Anwendungen nicht ausreichend ist.

US 3,077,535 beschreibt ein beleuchtetes Panel für die Anzeige von Buchstaben, Symbolen oder Pfeilen, wobei eine transparente Schicht von einer lichtundurchlässigen Schicht bedeckt ist, in die die entsprechenden Symbole eingebracht sind. In der transparenten Schicht sind Ausnehmungen angeordnet, in denen jeweils eine Leuchte eingebracht ist. Die Ausnehmungen weisen an ihrer Oberseite eine Lichtmaske auf, beispielsweise eine Metallscheibe. Die Seiten der Ausnehmungen sind als Lichtfilterbuchse ausgebildet.

Die US6007209 beschreibt eine Beleuchtungseinrichtung zur Erzeugung von Mischfarben. Dabei sitzen LEDs verschiedener Farben in einer nach oben offenen reflektierenden Kavität, die durch einen Diffusor abgeschlossen ist, und sind jeweils mit einem eigenen Reflektor abgedeckt, so dass das von den LEDs emittierte Licht nur seitlich in die Kavität einfallen kann.

Die WO9013885 beschreibt eine Beleuchtungseinrichtung mit einer Lichtleitplatte, in deren Unterseite Ausnehmungen vorhanden sind, die LEDs aufnehmen, als Alternative zu einer reflektierenden, nach oben offenen Kavität mit Diffusor.

Die DE29915399 beschreibt eine Beleuchtungseinrichtung, bei der LEDs in einer ersten Lichtleiterschicht eingegossen sind und mit einer Deckplatte abgeschlossen werden.

Die JP08255504 und die JP04338723 beschreiben die Verwendung eines Reflektors an der Oberseite einer Ausnehmung für eine Lichtquelle in einer Lichtleiterplatte, um die Entstehung sogenannter "Hot Spots" zu vermeiden, da Licht nur über die Seitenwände der Ausnehmung in die Lichtleiterplatte gelangen kann.

Die Verwendung eines rückseitigen, von der Lichtleiterplatte durch einen Luftspalt beabstandeten Reflektor ist aus dem Stand der Technik ebenfalls bekannt (JP04338723, US5876107).

Eine Aufgabe, die der Erfindung zugrunde liegt, besteht deshalb darin, eine Beleuchtungseinrichtung der eingangs genannten Art zu schaffen, mit der Licht mit einer gewünschten Farbe und einer insbesondere auch bei einer grösseren Lichtaustrittfläche hohen Homogenität und Gleichmässigkeit im Hinblick auf die Farbe und die Helligkeit des Lichtes erzeugt werden kann.

Gelöst wird diese Aufgabe mit einer Beleuchtungseinrichtung zur Erzeugung von Mischfarben, die eine Lichtaustrittsfläche sowie eine Mehrzahl von Lichtquellen mit verschiedenen Farben umfasst, und die gemäss Anspruch 1 gekennzeichnet ist durch eine Lichtleiterplatte, in die eine Mehrzahl von jeweils eine Lichtquelle enthaltende Ausnehmungen eingebracht ist, die jeweils eine der Lichtaustrittsfläche zugewandte Oberseite und Seitenwände aufweisen, wobei die Oberseite mit einer ersten reflektierenden Schicht bedeckt ist und die Lichteinkopplung in die Lichtleiterplatte durch die Seitenwände erfolgt.

Diese Lösung vereint verschiedene Vorteile miteinander. Die Herstellung dieser Beleuchtungseinrichtung ist wesentlich einfacher als die Herstellung der aus dem oben genannten Stand der Technik bekannten Beleuchtungseinrichtungen, da ausser den Ausnehmungen keine jeder Lichtquelle zugeordnete Strukturen erforderlich sind. Die Abmessungen der Beleuchtungseinrichtung sind im wesentlichen durch die Abmessungen der Lichtleiterplatte gegeben, so dass nicht nur eine geringe Bautiefe, sondern auch eine nahezu beliebig grosse Lichtaustrittsfläche realisiert werden kann. Eine gewünschte Lichtintensität kann durch eine entsprechende Wahl der Anzahl von Lichtquellen erzielt werden.

Ein weiterer wesentlicher Vorteil besteht darin, dass sich das Licht jeder einzelnen Lichtquelle nahezu homogen über die gesamte Lichtleiterplatte verteilt, jedoch nicht direkt von den Lichtquellen auf die Lichtaustrittsfläche auftreffen kann, so dass keine nennenswerte Abhängigkeit des ausgekoppelten Lichtes von den individuellen Eigenschaften der eingesetzten Lichtquellen, wie zum Beispiel Schwankungen der Lichtintensität oder der Farbeigenschaften besteht. Trotzdem steht durch die Art der Lichteinkopplung ein sehr hoher Anteil des von jeder Lichtquelle abgegebenen Lichtes an der Lichtaustrittsfläche zur Verfügung, so dass die Verluste gering und die Effizienz der Lichtquellen hoch ist.

Die Unteransprüche haben vorteilhafte Weiterbildungen der Erfindung zum Inhalt.

Mit den Ausführungen gemäß den Ansprüchen 5 bis 6 wird eine besonders hohe Homogenität des farbigen Lichtes auf der Lichtaustrittsfläche erzielt, da kein Teil des von den Lichtquellen ausgehenden Lichtes direkt auf die Lichtaustrittsfläche gelangen kann.

Mit der Ausführung gemäß dem Anspruch 1 wird die Effizienz der Lichtquellen weiter erhöht, während die Ausführungen gemäß den Ansprüchen 3 und 4 besonders einfach herstellbar sind.

Mit der Wahl der Lichtquellen gemäß Anspruch 1 kann mit geringem Aufwand schließlich nahezu jede beliebige Mischfarbe erzeugt werden, da der Beitrag jeder der drei Farben zu der Mischfarbe durch entsprechende Einstellung der Versorgungsspannung der betreffenden Lichtquellen auf relativ einfache Weise bestimmbar ist.

Weitere Einzelheiten, Merkmale und Vorteile der Erfindung ergeben sich aus der folgenden Beschreibung einer bevorzugten Ausführungsform anhand der Zeichnung. Es zeigt:
Fig. 1 eine perspektivische Ansicht der bevorzugten Ausführungsform; und
Fig. 2 einen Querschnitt durch die Beleuchtungseinrichtung gemäß Figur 1.

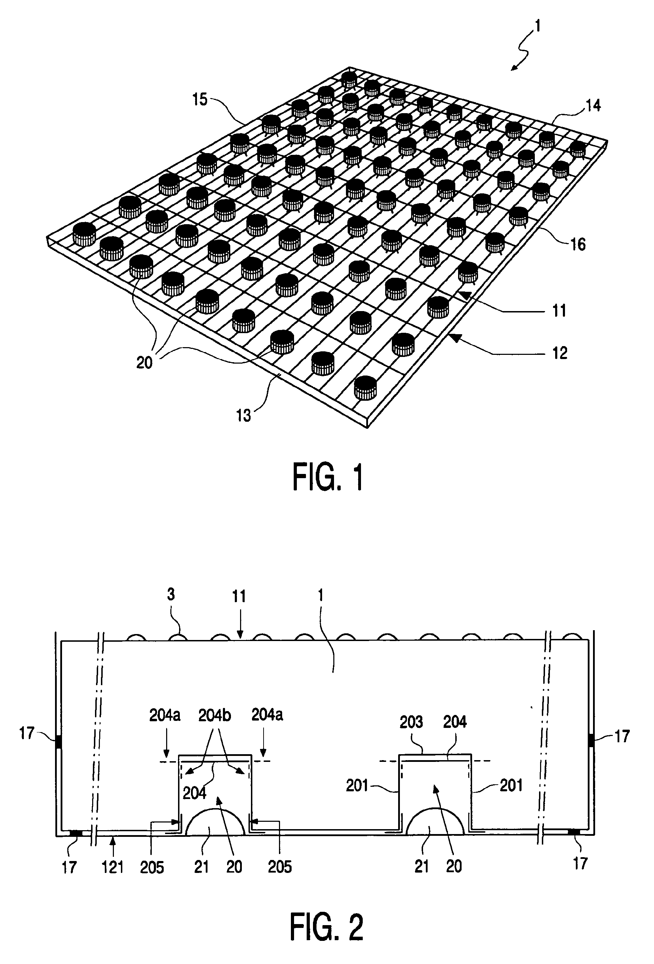

Figur 1 zeigt eine rechteckige Lichtleiterplatte 1, die aus einem lichttransparenten Material hergestellt ist. Die Platte umfasst an der Oberseite eine Lichtaustrittsfläche 11, aus der das Licht in bekannter Weise ausgekoppelt wird, eine dieser gegenüberliegende Unterseite 12, sowie vier Seitenflächen 13 bis 16. In die Unterseite der Platte 1 sind eine Mehrzahl von sich in Richtung auf die Lichtaustrittsfläche 11 erstreckenden zylindrischen Ausnehmungen 20 (schematisch angedeutet) für Lichtquellen eingebracht.

Die Ausnehmungen sind vorzugsweise in Form eines regelmäßigen Gitters gleichmäßig über die Lichtleiterplatte verteilt. Die Anzahl und der Abstand der zylindrischen Ausnehmungen ist dabei im wesentlichen beliebig und kann in Abhängigkeit von der Größe der Beleuchtungseinrichtung, der gewünschten Lichtstärke an der Lichtaustrittsfläche sowie der Art der Lichtquellen gezahlt werden.

Die Lichtleiterplatte 1 und insbesondere deren Lichtaustrittsfläche 11 muss nicht unbedingt rechteckig sein. Vielmehr sind alternativ dazu auch andere Formen wie zum Beispiel quadratische, runde oder ovale Formen usw. möglich. Anstelle eines kreisförmigen Querschnitts der Ausnehmungen können auch andere Querschnitte gewählt werden, die zum Beispiel rechteckig oder polygonal sind.

Figur 2 zeigt einen Querschnitt durch die Lichtleiterplatte 1 im Bereich von zwei Ausnehmungen 20, die jeweils Seitenwände 201 und eine Oberseite 203 aufweisen.

In jeder Ausnehmung 20 befindet sich eine im wesentlichen punktförmige Lichtquelle 21, die zum Beispiel eine Leuchtdiode sein kann. Die Farbe der Lichtquelle (Grundfarbe), die in eine Ausnehmung 20 eingesetzt wird so gewählt, dass keine Gruppen mit benachbarten gleichfarbigen Lichtquellen entstehen, das heißt dass die in jeweils benachbarten Ausnehmungen liegenden Lichtquellen Licht mit unterschiedlichen (Grund-) Farben erzeugen. Dadurch wird die Homogenität der Mischfarbe weiter verbessert.

Jede Grundfarbe, aus der sich die Mischfarbe zusammensetzt, wird durch eine Mehrzahl von Lichtquellen 21 erzeugt. Dies hat zur Folge, dass Schwankungen der Lichtintensität und / oder der Lichtfarbe von Lichtquellen des gleichen Typs ausgeglichen bzw. gemittelt werden, so dass Abweichungen oder ein Totalausfall einzelner Lichtquellen nicht ins Gewicht fallen und keine aufwendige elektronische Regelung oder andere Maßnahmen erforderlich sind, um den üblichen Toleranzenbereichen der Lichtquellen Rechnung zu tragen.

Die Seitenwände 201 der Ausnehmungen 20, die im wesentlichen senkrecht zur Lichtaustrittsdäche 11 der Lichtleitaplatte 1 verlaufen, sind durch das Material der Lichtleiterplatte 1 gebildet, während die Oberseiten 203 der Ausnehmungen, die im wesentlichen parallel zu der Lichtaustrittsfläche 11 verlaufen, mit einer beidseitig hochreflektierenden ersten Schicht 204 versehen sind

Hierbei bestehen zwei Möglichkeiten. Entweder ist die erste Schicht 204 direkt auf die Oberseite 203 der Ausnehmung 20 aufgebracht, so dass kein Spalt oder Zwischenraum zwischen der Oberseite 203 und der ersten Schicht 204 vorhanden ist. Somit ist ein optischer Kontakt zwischen dieser Schicht und der Lichtleiterplatte 1 gegeben, wobei die Schicht möglichst spiegelnd reflektierend sein sollte. Alternativ dazu ist es auch möglich, die erste Schicht 204 von der Oberseite 203 der Ausnehmung in Richtung zu deren Innenraum zu beabstanden, so dass ein Spalt entsteht, wobei die Schicht zum Beispiel geringfügig in Richtung auf die Lichtquelle 21 konkav gekrümmt sein kann. In diesem Fall besteht kein optischer Kontakt zwischen der ersten Schicht 204 und der Lichtleiterplatte 1, und das Licht aus der Platte 1 wird bereits an der Oberseite 203 der Ausnehmung bzw. der Übergangsfläche zwischen dem Material der Lichtleiterplatte und dem Spalt durch Totalreflektion in die Platte zurückreflektiert. Da diese Reflektion nur sehr geringe Verluste verursacht, wird im allgemeinen bevorzugt, die erste Schicht 204 von der Oberseite 203 zu beabstanden.

Die Unterseite der Ausnehmungen 20 ist schließlich durch eine hochreflektierende zweite Schicht 121 abgedeckt. Diese Schicht kann z B. auf eine Bodenwand sowie vorzugsweise die Innenwände eines die Lichtleiterplatte 1 umschließenden Gehäuses (nicht dargestellt) aufgebracht sein, so dass die zweite reflektierende Schicht 121 die ganze Unterseite 12 und auch die Seitenflächen 13 bis 16 bedeckt, so dass von außen kein optischer Kontakt zu den abgedeckten Flächen besteht.

An der Lichtaustrittsfläche 11 befindet sich schließlich eine Mehrzahl von Extraktionselementen 3, mit denen das Licht in bekannter Weise aus der Lichtleiterplatte 1 ausgekoppelt wird

Zur Montage der Beleuchtungseinrichtung werden die Lichtquellen vorzugsweise an der Bodenwand eines Gehäuses befestigt. Anschließend wird die Lichtleiterplatte 1 mit den an den entsprechenden Stellen eingebrachten Ausnehmungen 20 in das Gehäuse eingesetzt, so dass jede Lichtquelle 21 in jeweils einer Ausnehmung liegt. Weiterhin sind Abstandhalter 17 zwischen den Seitenflächen 13 bis 16 der Lichtleiterplatte und Innenwänden des Gehäuses sowie zwischen der Unterseite 12 der Lichtleiterplatte und der Bodenwand des Gehäuses vorgesehen, mit denen die zweite reflektierende Schicht 121 (an den Gehäuse-Innenwänden) von der Lichtleiterplatte beabstandet wird, so dass zwischen der Schicht 121 einerseits und den Seitenflächen 13 bis 16 bzw. der Unterseite 12 andererseits ein Luftspalt vorhanden bleibt.

Die von den Lichtquellen 21 ausgehenden Lichtstrahlen können in das Material der Lichtleiterplatte 1 nur durch die Seitenwände 201 der Ausnehmungen 20 eindringen. Sie breiten sich in der Lichtleiterplatte 1 durch nahezu verlusffreie Totalreflektionen an den Seitenflächen 13 bis 16 sowie der Unterseite 12 der Lichtleiterplatte 1 bzw. der dort angeordneten zweiten Schicht 121 aus, bis sie an der Lichtaustrittsfläche 11 ausgekoppelt werden. Dies soll im folgenden im Detail beschrieben werden.

Trifft ein sich in der Lichtleiterplatte ausbreitender Lichtstrahl auf die Seitenwand 201 einer Ausnehmung 20, so dringt er in diese ein, wird innerhalb der Ausnehmung an der Lichtquelle 21 und /oder der hochreflektierenden ersten bzw. zweiten Schicht 204, 121 gestreut und verlässt die Ausnehmung wieder durch die Seitenwand 201.

Sofern ein sich in der Lichtleiterplatte ausbreitender Lichtstrahl auf die äußere Oberseite 203 einer Ausnehmung trifft, wild er entsprechend der oben beschriebenen Alternativen entweder an der ersten Schicht 204 reflektiert, wenn diese in optischem Kontakt mit der Oberseite steht, oder er unterliegt einer Totalreflektion an der Oberseite 203, wenn kein optischer Kontakt zu der ersten Schicht 204 besteht, so dass der Lichtstrahl in beiden Fällen an der Ausnehmung 20 vorbeigeleitet wird

Durch diese Art der Lichteinkopplung und Lichtausbreitung kommt es zu einer sehr homogenen Verteilung des Lichtes jeder einzelnen Lichtquelle in der gesamten Lichtleiterplatte 1 und insbesondere zu einer sehr gleichmäßigen Verteilung der Beiträge der einzelnen Lichtquellen bzw Leuchtdioden zu dem an der Lichtaustrittsfläche 11 ausgekoppelten Licht. Dadurch wird eine gleichmäßige Mischung der erzeugten Grundfarben und somit eine homogene Mischfarbe mit konstanter Helligkeit und konstantem Farbton über der gesamten Lichtaustrittsfläche erzielt. Da sich das Licht jeder Lichtquelle über die gesamte Lichtleiterplatte verteilt, ist darüber hinaus der Einfluss einer einzelnen Lichtquelle durch zum Beispiel schwankende Intensität oder Farbe oder im Fehlerfall gering und tritt kaum in Erscheinung.

Diese Eigenschaften verbesern sich mit zunehmender Anzahl von Lichtquellen. Um eine möglichst hohe Anzahl von Lichtquellen pro Flächeneinheit der Lichtleiterplatte zu erhalten, bieten sich insbesondere Leuchtdioden an, die relativ klein und kostengünstig herstellbar sind. Gleichzeitig wird durch eine hohe Anzahl von Leuchtdioden natürlich auch eine entsprechend hohe Lichtintensität an der Lichtaustrittsfläche erzielt.

Zur Erzeugung von Licht mit einer gewünschten Farbe werden zunächst Lichtquellen mit geeigneten Grundfarben gewählt, aus denen die gewünschte Farbe (Mischfarbe) durch Lichtmischung gewonnen werden kann. Im allgemeinen sind dafür drei oder vier Grundfarben ausreichend, die zum Beispiel mit roten, grünen und blauen sowie eventuell gelben Leuchtdioden erzeugt werden können. Die Leuchtdioden werden dann gemäß der oben beschriebenen Verteilung in jeweils eine Ausnehmung 20 eingesezt. Die genaue Abstimmung der Mischfarbe oder ein Wechsel zwischen verschiedenen Farben wird dann auf elektronischen Wege durch entsprechende Einstellung der Versorgungsspannung und damit der Helligkeit der Leuchtdioden mit der betreffenden Grundfarbe vorgenommen.

Das in bekannter Weise mit den Extraktionsdementen 3 ausgekoppelte Licht kann zum Beispiel zur Beleuchtung einer an der Lichtaustrittsfläche 11 angeordneten Flüssigkristallanzeige oder eines LCD-Bildschirms dienen. Durch geeignete Dimensionierung bzw. Anordnung der Extraktionsdemente, die auch unregelmäßig sein kann, kann die Gleichmäßigkeit der Ausleuchtung weiter verbessert werden.

Die Lichtleiterplatte 1 befindet sich vorzugsweise in einem Gehäuse (nicht dargestellt) mit Wänden, die mit der zweiten Schicht 121 beschichtet sind und gemäß Figur 2 die Unterseite 12 sowie die Seitenflächen 13 bis 16 abdecken, so dass von außen kein optischer Kontakt zu den abgedeckten Flächen besteht. Die zweite Schicht 121 kann dabei spiegelnd oder diffus reflektierend sein.

Weiterhin besteht die Möglichkeit, die zweite Schicht 121 direkt auf der betreffenden Seitenfläche 13 bis 16 bzw. der Unterseite 12 anzuordnen, so dass die Abstandhalter 17 entfallen. Dies hat allerdings den Nachteil, dass insbesondere in dem Fall, in dem die zweite Schicht diffus reflektierend ist, ein Teil des auftreffenden Lichtes von den Seitenflächen direkt in Richtung auf die Lichtaustrittsfläche 11 reflektiert werden kann, was zu nachteiligen Effekten führen würde. Diese können zwar weitgehend vermieden werden, wenn die zweite Schicht spiegelnd reflektierend ist, solche Schichten sind jedoch wesentlich teurer, da sie mit einem vergleichbar hohen Reflektionsgrad nur mit großem Aufwand hergestellt und auf die Flächen der Lichtleiterplatte aufgebracht werden können.

Es hat sich überraschend gezeigt, dass dieses Problem gelöst werden kann, wenn die zweite Schicht 121 nicht direkt auf die betreffende Seitenfläche 13 bis 16 bzw. die Unterseite 12 aufgebracht wird, sondern einen Abstand von zum Beispiel 0,1 mm von der Lichtleiterplatte aufweist, so dass zwischen beiden aufgrund eines Luftspaltes kein optischer Kontakt besteht. Zu diesem Zweck sind die Abstandhalter 17 vorgesehen.

Tritt nun ein Lichtstrahl durch eine der Seitenflächen 13 bis 16 (oder die Unterseite 12) aus der Lichtleiterplatte 1 aus, so wird er zunächst an der Seitenfläche gebrochen, durchläuft dann den Luftspalt und wird von der vorzugsweise diffus reflektierenden zweiten Schicht 121 zurückreflektiert. Nachdem er den Luftspalt erneut durchlaufen hat, tritt er wieder in die Lichtleiterplatte 1 ein und erfüllt unter der Voraussetzung, dass der Brechungsindex der Platte nicht kleiner als 1,41 ist, weiterhin die Bedingung für die Totalreflektion.

Dadurch werden auch diejenigen Lichtanteile, die die Lichtleiterplatte durch die Seitenflächen oder die Unterseite verlassen, wieder in diese zurückreflektiert. Zur Erzeugung der zweiten Schicht 121 können weiße Folien oder weiße Farben verwendet werden, die mit Reflektionsgraden von über 95 bis 98 % allgemein erhältlich sind. Es ist natürlich auch möglich, eine spiegelnd reflektierende zweite Schicht 121 zu verwenden. Allerdings hat eine diffus reflektierende Schicht den Vorteil, dass das Licht nach der Reflektion noch besser in der Lichtleiterplatte verteilt wird und dass diese Schicht mit höheren Reflektionsgraden und zu geringeren Kosten als eine spiegelnd reflektierende Schicht erzeugt werden kann.

Mit dieser Konfiguration ist somit eine sehr wirksame Einkopplung sowie eine gleichmäßige und weitgehend verlustfreie Verteilung des Lichtes einer großen Anzahl von Lichtquellen möglich.

Es hat sich ferner als vorteilhaft erwiesen, die hochreflektierende erste Schicht 204 an der Oberseite 203 der Ausnehmungen 20 entweder mit einem ersten Abschnitt 204a (in Figur 2 gestrichelt angedeutet) in horizontaler Richtung um einige Millimeter in die Lichtleiterplatte 1 fortzusetzen (zu diesem Zweck würde die Lichtleiterplatte aus zwei Schichten zusammengesetzt werden). Alternativ dazu (insbesondere wenn die Schicht durch Aufdampfen realisiert wird) kann die Schicht mit einem zweiten Abschnitt 204b (in Figur 2 gestrichelt angedeutet) in dazu senkrechter Richtung um die oberen Innenkanten der Ausnehmung und um einige Millimeter entlang der Seitenwände an diesen nach unten weitergeführt werden. Mit diesen Abschnitten wird jeweils vermieden, dass an den Kanten der Ausnehmung unerwünschtes Streulicht entsteht.

Zu diesem Zweck können weiterhin auch die an die gegenüberliegenden unteren Kanten der Ausnehmungen 20 angrenzenden Bereiche der Seitenwände 201 bzw. der Unterseite 12 der Lichtleiterplatte 1 mit einer hochreflektierenden dritten Schicht 205 versehen sein, die sich jeweils einige Millimeter entlang dieser Bereiche erstreckt.

Schließlich sei darauf hingewiesen, dass die Beabstandung der reflektierenden zweiten Schicht 121 von den Seitenflächen bzw. der Unterseite der Lichtleiterplatte unabhängig von der Art, Anzahl und Anordnung der Lichtquellen ist.

## Patentansprüche

1. Beleuchtungseinrichtung zur Erzeugung von Mischfarben zur Hintergrundbeleuchtung
einer Flüssigkristallanzeige, enthaltend:
- eine Lichtaustrittsfläche,
- eine gegenüber der Lichtaustrittsfläche liegende erste reflektierende Schicht (121), die eine Grundfläche und Seitenflächen aufweist,
- eine Mehrzahl von Lichtquellen mit verschiedenen Farben, wobei
die Lichtquellen (21) jeweils eine Mehrzahl von roten, grünen und blauen Leuchtdioden
sind, die so auf der Grundfläche der ersten reflektierenden Schicht verteilt sind, dass in benachbarten Positionen keine Lichtquellen mit gleicher Farbe liegen,
**dadurch gekennzeichnet, dass** die Beleuchtungseinrichtung eine Lichtleiterplatte (1) enthält, deren eine Fläche die Lichtaustrittsfläche bildet und deren Seitenflächen (13, 14, 15, 16) und Unterseite (12) von der Grundfläche und den Seitenflächen der ersten reflektierenden Schicht überdeckt werden, und die eine Mehrzahl von Ausnehmungen (20) mit jeweils einer der Lichtaustrittsfläche zugewandten Oberseite (203) und Seitenwänden (201) aufweist, wobei jeweils eine Lichtquelle in einer der Ausnehmungen eingebracht ist, wobei jeweils die Oberseite der Ausnehmung mit einer zweiten reflektierenden Schicht (204) bedeckt ist und die Lichteinkopplung in die Lichtleiterplatte durch die Seitenwände der Ausnehmungen erfolgt, wobei die erste reflektierende Schicht einen einen Luftspalt bildenden Abstand von der Lichtleiterplatte aufweist und Abstandshalter (17) die erste reflektierende Schicht beabstanden, wobei die erste reflektierende Schicht die Ausnehmungen an ihrer der Oberseite gegenüberliegenden Unterseite bedeckt, und
die der Oberseite (203) gegenüberliegenden unteren Kanten der Ausnehmungen (20) mit einer dritten reflektierenden Schicht (205) umgeben sind.

2. Beleuchtungseinrichtung nach Anspruch 1, **dadurch gekennzeichnet, dass** die Seitenwände (201) der Ausnehmungen (20) im wesentlichen senkrecht zu der Lichtaustrittsfläche (11) und die Oberseiten (203) der Ausnehmungen (20) im wesentlichen parallel zu der Lichtaustrittsfläche (11) verlaufen.

3. Beleuchtungseinrichtung nach Anspruch 1,**dadurch gekennzeichnet, dass** die Ausnehmungen (20) im wesentlichen zylindrisch sind.

4. Beleuchtungseinrichtung nach Anspruch 1,**dadurch gekennzeichnet, dass** die Ausnehmungen (20) in die Unterseite (12) der Lichtleiterplatte (1) eingebracht sind.

5. Beleuchtungseinrichtung nach Anspruch 1,**dadurch gekennzeichnet, dass** sich die zweite reflektierende Schicht (204) mit einem ersten Abschnitt (204a) in horizontaler Richtung in die Lichtleiterplatte (1) fortsetzt.

6. Beleuchtungseinrichtung nach Anspruch 1,**dadurch gekennzeichnet, dass** sich die zweite reflektierende Schicht (204) mit einem zweiten Abschnitt (204b) entlang der Seitenwände (201) der Ausnehmung (20) fortsetzt.

7. Flüssigkristallanzeige mit einer Beleuchtungseinrichtung nach einem der vorhergehenden Ansprüche.

## Claims

1. A lighting device for generating mixed colours for backlighting a liquid crystal display, containing:
- a light emission surface,
- a first reflecting layer (121) that is positioned opposite the light emission surface and that has a base surface and lateral walls,
- a plurality of light sources with different colours, the light sources (21) being a plurality of red, green, and blue light emitting diodes that are distributed on the base surface of the first reflecting layer in such a manner that there are no light sources having the same colour located in the adjacent positions,
**characterised in that** the lighting device contains a light guide plate (1) the surface of which forms the light emission surface and the lateral walls (13, 14, 15, 16) and lower surface (12) of which are covered by the base surface and lateral walls of the first reflecting layer, and that furthermore has a plurality of recesses (20) each with an upper surface (203) opposite the light emission surface and lateral walls (201), one light source being positioned in one of the recesses, the upper surface of the recess being covered by a second reflecting layer (204) and the light coupling occurs in the light guide plate by means of the lateral walls of the recesses, the first reflecting layer having a gap that forms an air space between the light guide plate while distance pieces (17) distance the first reflecting layer, said first reflecting layer covering the recesses in its lower surface opposite the upper surface,
and the lower edges of the recesses (20) opposite the upper surface (203) are surrounded by a third reflecting layer (205).

2. The lighting device as set forth in claim 1, **characterised in that** the lateral walls (201) of the recesses (20) extend substantially perpendicular to the light emission surface (11) and the upper sides (203) of the recesses (20) extend substantially parallel to the light emission surface (11).

3. The lighting device as set forth in claim 1, **characterised in that** recesses (20) are substantially cylindrical.

4. The lighting device as set forth in claim 1, **characterised in that** the recesses (20) are positioned in the lower surface (12) of the light guide plate (1).

5. The lighting device as set forth in claim 1, **characterised in that** the second reflecting layer (204) continues horizontally with a first section (204a) in the light guide plate (1).

6. The lighting device as set forth in claim 1, **characterised in that** the second reflecting layer (204) continues with a second section (204b) along the lateral walls (201) of the recess (20).

7. Liquid crystal display with a lighting device as claimed in any of the preceding claims.

## Revendications

1. Dispositif d'éclairage destiné à produire des couleurs mélangées pour l'éclairage de fond d'un écran à cristaux liquides, contenant :
- une surface de sortie de lumière,
- une première couche réfléchissante (121) située à l'opposé de la surface de sortie de lumière et comprenant une surface de base et des surfaces latérales,
- plusieurs sources de lumière dotées de différentes couleurs,
les sources de lumière (21) étant respectivement plusieurs diodes électroluminescentes rouges, vertes et bleues réparties sur la surface de base de la première couche réfléchissante de sorte qu'aucune source de lumière de même couleur ne se situe dans des positions voisines,
**caractérisé en ce que** le dispositif d'éclairage contient une plaque conductrice de lumière (1) dont l'une des surfaces forme la surface de sortie de lumière et dont les surfaces latérales (13, 14, 15, 16) et la face inférieure (12) sont recouvertes par la surface de base et les surfaces latérales de la première couche réfléchissante, et comprenant plusieurs évidements (20) dotés respectivement d'un côté supérieur (203) tourné vers la surface de sortie de lumière et de parois latérales (201), respectivement une source de lumière étant introduite dans un des évidements, respectivement le côté supérieur de l'évidement étant recouvert par une deuxième couche réfléchissante (204) et l'injection de lumière s'effectuant dans la plaque conductrice de lumière à travers les parois latérales des évidements, la première couche réfléchissante présentant un écart par rapport à la plaque conductrice de lumière formant un entrefer et des entretoises (17) tenant la première couche réfléchissante à distance, la première couche réfléchissante recouvrant les évidements sur leur côté inférieur opposé au côté supérieur,
et les arêtes inférieures des évidements (20) se tenant à l'opposé du côté supérieur (203) étant entourées par une troisième couche réfléchissante (205).

2. Dispositif d'éclairage selon la revendication 1, **caractérisé en ce que** les parois latérales (201) des évidements (20) s'étendent sensiblement perpendiculairement à la surface de sortie de lumière (11) et les côtés supérieurs (203) des évidements (20) s'étendent sensiblement parallèlement à la surface de sortie de lumière (11).

3. Dispositif d'éclairage selon la revendication 1, **caractérisé en ce que** les évidements (20) sont sensiblement cylindriques.

4. Dispositif d'éclairage selon la revendication 1, **caractérisé en ce que** les évidements (20) sont insérés dans le côté inférieur (12) de la plaque conductrice de lumière (1).

5. Dispositif d'éclairage selon la revendication 1, **caractérisé en ce que** la deuxième couche réfléchissante (204) se prolonge avec une première partie (204a) dans la direction horizontale dans la plaque conductrice de lumière (1).

6. Dispositif d'éclairage selon la revendication 1, **caractérisé en ce que** la deuxième couche réfléchissante (204) se prolonge avec une seconde partie (204b) le long des parois latérales (201) de l'évidement (20).

7. Ecran à cristaux liquides doté d'un dispositif d'éclairage selon l'une quelconque des revendications précédentes.
